**Europäisches Patentamt**

**European Patent Office**

**Office européen des brevets**

(11) Publication number : **0 499 438 A1**

# (12) EUROPEAN PATENT APPLICATION

(21) Application number : **92301108.4**

(22) Date of filing : **11.02.92**

(51) Int. Cl.⁵ : **C23F 13/02, C04B 32/02**

(30) Priority : **12.02.91 GB 9102892**

(43) Date of publication of application :
**19.08.92 Bulletin 92/34**

(84) Designated Contracting States :
**AT BE CH DE DK ES FR GB GR IT LI LU NL SE**

(71) Applicant : **ICI AMERICAS INC.**
**Concord Pike & New Murphy Road**
**Wilmington Delaware 19897 (US)**

(72) Inventor : **Westhof,Luc Bruno Jozef**
**Kloosterbaan 140**
**B-2370 Arendonk (BE)**
Inventor : **Turhan,Ibrahim**
**52 Clover Lane**
**Levitown, PA 19055 (US)**
Inventor : **Tessier,George Gerad**
**5-17 Shepherd's Way**
**Holland, PA 19007 (US)**
Inventor : **De Peuter,Frans Leonia Jozef**
**Rijtenhof 10**
**B-2400 Mol (BE)**

(74) Representative : **Pugsley, Roger Graham et al**
**ICI Group Patents Services Dept. P.O. Box 6**
**Shire Park Bessemer Road**
**Welwyn Garden City Herts, AL7 1HD (GB)**

(54) **Reinforced concrete system.**

(57)    A reinforced concrete system provided with cathodic protection has a metal mesh anode embedded in a conductive cementitious composition. The use of a conductive cementitious composition around the anode mesh results in a reduced amount of acid degradation of the mortar around the mesh.

EP 0 499 438 A1

The present invention relates to reinforced concrete systems and, in particular, to such systems which are provided with cathodic protection of the reinforcement.

Concrete is extensively used in many structures including bridges and high buildings and in structures of this type the concrete may be reinforced by metal either as mesh or rod. The metal reinforcement is typically steel. Many reinforced structures are exposed to weather and structures on or near the coast may be exposed to sea water or sea water spray. Furthermore, bridge structures may be subject to the effect of salt which is used in an attempt to keep road surfaces free from ice in winter months. The concrete is porous and water and/or salts can penetrate the concrete to the metal reinforcement which becomes corroded. The corrosion can result in deterioration of the reinforcement and in the bonding between the reinforcement and the surrounding concrete with the consequence that extensive restoration work may be required to prevent structural failure.

To reduce such corrosion, it has been proposed that the reinforcement is protected by applying an electric potential across the structure with the reinforcement acting as the cathode and a mesh conductor, formed from a metal such as copper wires coated with a conductive polymer or a titanium mesh having a metal oxide coating attached to the surface of the structure acting as anode. Mesh conductors of this type are commercially available, for example as "Elgard Anode Mesh" from Elgard Corporation, Chardon, OH 44024-1095, USA. The mesh conductor is generally then coated with an overlay of a cementitious composition which forms a mortar surface layer on the structure. Cathodic protection of the metal reinforcement in the foregoing manner inhibits corrosion of the reinforcement. However, it has been found that the cementitious composition around the mesh conductor deteriorates due to the formation of hydrogen ions at the anode and migration of these ions through the cementitious composition. If the deterioration is allowed to proceed sufficiently, a breakdown in the structure of the mortar can occur and this breakdown can result in delamination affecting the current flow and, ultimately, result in there being no current flow and hence no cathodic protection of the reinforcement.

A reinforced concrete system having cathode protection has also been proposed using metal rod anodes embedded in a conducting cementitious composition containing carbon particles or carbon fibres. In such systems, some deterioration of the cementitious composition surrounding the anode still occurs owing to limitations in the conduction of the available cementious compositions.

We have found that the combined use of a mesh anode together with a cementious composition exhibits a surprisingly enhanced protection of the reinforced concrete system, and significantly reduces deterioration of the cementitious composition in contact with the mesh anode.

Thus, according to the present invention there is provided a composite reinforced concrete structure comprising metal reinforcement embedded in concrete and a mesh conductor embedded in a cementitious composition having a resistivity of not more than 500 ohm-cm through which the conductor is attached to the surface of the structure.

The mesh conductor which acts as the anode may be any metal mesh which is suitable for use in a cathodically protected reinforced concrete structure but is preferably a coated copper or titanium mesh as hereinbefore described.

The conducting cementitious composition can be any cementitious composition having a resistivity of not more than 500 ohm-cm, preferably not more than 100 ohm-cm, and especially not more than 50 ohm-cm.

The conducting cementitious composition is preferably a cementitious composition containing a conducting filler. The conducting filler may be a particulate metal in the form of spheres or any other suitable shape such as fibres or plates. However, many metals are susceptible to oxidation and the formation of an oxide coating on the metal particles can result in an undesirable decrease in the conductivity of any medium, such as concrete, which contains the metal particles as a conductive filler. Whilst some metals are resistant to oxidation, these are generally more expensive materials and thus their use is not economically attractive. Alternative fillers are various forms of carbon, such as carbon black, coke and graphite. The carbon can be in any desired particle form and is spheroidal, preferably has an average particle size of less than 10 mm. A preferred form is carbon fibre, especially graphite fibre. Such a fibre preferably have an average length of not more than 25 mm and an average diameter of not more than 25 micrometres. However, we have found that cementitious compositions containing carbon fibre show a decrease in conductivity over a period of time and an increasingly greater applied voltage is required in order to maintain a given current flow. Hence, it is preferred to use a conducting cementitious composition wherein the conductive filler is a metal-coated fibre especially a metal-coated carbon fibre, and more especially a metal-coated graphite fibre.

Other examples of metal-coated fibres are those derived from natural or synthetic materials such as glass, polyester, polyethylene and nylon. The metal may be deposited on the fibres by any known method such as electroplating.

The amount of conductive filler which is present in the cementitious composition is dependent on the nature of the filler, its particle form and the size of the filler particles. A preferred filler is graphite fibre, particularly metal-coated graphite fibre. Using graphite fibre, a resistivity of less than 10 ohm-cm can be achieved when the cementitious composition contains from about 0.5 up to 2.0% by weight of the graphite fibre, the conductivity being dependent on the specific type and dimensions of the graphite fibre. Preferably the fibre has an average length of not more than about 25 mm, especially not more than 15 mm, for example less than 10 mm. The fibre preferably has an average diameter of not more than 25 micrometres, especially not more than 15 micrometres, for example less than 10 micrometres.

If metal-coated fibre is used, the metal is preferably one having a good conductivity and particularly preferred are metals which are oxidation resistant. Metals having satisfactory conductivity and oxidation resistance include nickel, cobalt, silver, platinum and iridium and useful metal-coated carbon fibres are nickel-coated graphite fibres. The metal coating is typically a thin coating which does not add substantially to the thickness of the coated fibre and typically the metal coating has a thickness of not more than 20% of the thickness of the coated fibre. The metal coating typically has a thickness of not more than one micrometre. Metal-coated fibres, such as carbon fibres are available commercially and any such material may be used to provide the conducting cementitious composition of the present invention.

The conducting cementitious composition may contain more than one conducting filler, for example a mixture of carbon fibre and carbon black in which the two components are in any desired relative proportions by weight and conveniently the carbon fibre is at least 50% by weight of the mixture.

The conducting cementitious composition contains conducting filler in an amount sufficient to give a resistivity of not more than 500 ohm-cm and especially not more than 100 ohm-cm. Preferably the conducting cementitious composition contains at least 0.05% by weight, and especially at least 0.1% by weight, of a conducting filler. In general it is not necessary for the composition to contain more than 5% by weight of conducting filler and preferably the composition contains not more than 2% by weight of conducting filler.

The cementitious composition preferably comprises a hydraulic cement, that is one of the class of structural materials which are applied in admixture with water and thereafter harden or set as a result of physical or chemical changes which consume the water present. An example of such materials is Portland cement. Other examples of hydraulic cements are,

1. Rapidly hardening cements, as characterised by those with high alumina contents.

2. Low-heat cements as characterised by high percentages of dicalcium silicate and tetra-calcium alumino ferrite and low percentages of tricalcium silicate and tricalcium aluminate.

3. Sulphate resisting cements as characterised by unusually high percentages of tricalcium silicate and dicalcium silicate and unusually low percentages of tricalcium aluminate and tetracalcium alumino ferrite.

4. Portland blast-furnace cement as characterised by a mixture of Portland cement clinker and granulated slag.

5. Masonry cements as characterised by mixtures of Portland cement and one or more of the following: hydrated lime, granulated slag, pulverised limestone, colloidal clay, diatomaceous earth or other finely divided forms of silica, calcium stearate and paraffin.

6. Natural cements as characterised by material obtained from deposits in the Lehigh Vally, USA.

7. Lime cements as characterised by oxide of calcium in its pure or impure forms and whether containing or not some argillaceous materials.

8. Selenitic cement as characterised by the addition of 5-10% of plaster of Paris to lime.

9. Pozzolanic cement as characterised by the mixture of pozzolana, trass kieselguhr, pumice, tufa, santorin earth or granulated slag with lime mortar.

10. Calcium sulphate cements as characterised by those depending on the hydration of calcium sulphate and including plaster of Paris, Keene's cement and Parian cement.

The preferred hydraulic cement is Portland cement. White Portland cement, which is a cement of low iron and carbon content manufactured from specially selected ingredients, may also be used.

The conducting cementitious composition may contain other fillers, in addition to the conducting filler or fillers, provided that such fillers do not adversely effect the conductivity of the composition. Examples of other fillers are siliceous fillers, such as sand and gravel having a low clay content, preferably washed and having a particle size in the range of between 0.076 mm and 4 cm. The conducting cementitious composition is preferably a mortar and it is generally preferred that in such a composition the filler has a particle size of less than 2 mm.

The additional fillers may be in their natural state or they may be artificially coloured, for example, by application of a dyestuff or pigment. Fragments of glass, which may be clear, translucent or opaque, colourless or coloured, are also suitable. Other fillers which may be used are materials which have a low density compared with the siliceous fillers mentioned previously herein, for example, fragments of colourless or mass-pigmented plastic in the form of chips, turnings, tape or granules, conveniently the plastic waste resulting from the trimming of injection moulded articles or from other moulding processes. Suitable plastic materials include thermoplastic or thermosetting polymers and copolymers, for example, nylon polymers, polyvinyl chloride, vinyl chloride/vinyl acetate copolymers, urea/formaldehyde polymers, phenol/formaldehyde polymers, melamine/formaldehyde polymers, acetal polymers and copolymers, acrylic polymers and copolymers, acrylonitrile/butadiene/styrene terpolymers, cellulose acetate, cellulose acetate butyrate, polycarbonates, polyethylene terephthalates, polystyrenes, polyurethanes, polyethylenes, and polypropylenes. Some plastic materials are conveniently mixed into the cementitious composition as an aqueous dispersion or emulsion which can be mixed with powdered cement and other components of the composition to form the mortar or cement mixture which is applied as an overlayer to the anode mesh.

Other materials which may be used as the additional fillers include foamed plastics such as polystyrene foam and polyurethane foam, and also sawdust, wood chips, pumice, vermiculite and fibrous materials of natural or synthetic origin, for example, glass fibre, cotton, wool, polyamide fibre, polyester fibre, and polyacrylonitrile fibre.

By the use of low density fillers the overall density of the products resulting from the compositions of the present invention may be greatly reduced if desired. Filler having a fine particle size, by which is meant in the range from 75 microns to 1 micron, may also be used, and as examples of such materials there may be mentioned power station fly ash, expanded clay, foamed slag, mica, chalk, talc, clays such as china clay, barytes, silica, and powdered slate, reduced to the required degree of subdivision where necessary by grinding, milling, micronising or other suitable means.

Other suitable fillers include aluminium silicate refractory aggregates made by high temperature calcination of a china clay specially selected for low alkali content, and obtainable commercially under the name "Milochite" (Registered Trade Mark), also crushed mineral aggregates manufactured from blue flints obtained from deposits in the Thames Valley and available commercially under the name "Flintag" (Registered Trade Mark) as well as multicoloured calcined flints.

In general the conducting cementitious composition also includes a siliceous filler, especially fine sand to produce a mortar and may further include a plastic material such as an acrylic polymer. The siliceous filler is present in proportions known for such fillers in cementitious compositions, for example in an amount of up to several times by weight of the cement component of the composition. In general the siliceous filler is present in an amount of up to five times, and particularly not more than three times the weight of the cement component. The plastic material, if present, is present in an amount which is preferably from 2 up to 20% by weight relative to the weight of the cement component of the composition.

The conducting cementitious composition used in this invention may also comprise an effective amount of a plasticiser such as melmine/formaldehyde condensates or lignosulphonates. The proportion of the plasticiser preferably does not exceed 5% by weight of the cement component of the composition and is especially less than 1% by weight. If a plasticiser is present, this is preferably in an amount of at least 0.1% by weight relative to the weight of the cement component.

Should the conducting cementitious composition be such that it has a tendency to foam, then this tendency can be minimised by incorporating in the composition an effective amount of an antifoaming agent which may be a siloxane such as poly(siloxane), poly(alkylsiloxane) or poly(dialkylsiloxane).

The conducting cementitious composition is applied to a surface of a reinforced concrete structure having an anode mesh secured thereto and surrounds and covers the anode mesh. The composition may be applied using any suitable technique such as, for example trowelling, pouring or spraying. The anode mesh and the reinforced concrete structure may be as known and used commercially.

The conducting cementitious composition completely surrounds the mesh conductor and may form the surface layer of the reinforced concrete structure. The composition can be used to provide an overlay of any desired thickness which will be dependent to some extent on the amount of wear and/or exposure to which the overlay is subjected. The overlay may be of a thickness which is just sufficient to cover the mesh conductor or may be many times that thickness. Preferably the thickness of the overlay is at least 2 mm and especially is at least 5 mm. There is generally no benefit if the thickness of the overlay exceeds 100 mm and preferably the thickness does not exceed 50 mm and especially does not exceed 20 mm.

We have found that the use of an conducting cementitious composition as the overlay for the mesh conductor results in a reduction in the spread of acid from the conductor through the composition compared to the use of a similar cementitious composition which contains no conducting filler. Hence, in the reinforced concrete system of the present invention, the composition which is the anode overlay shows a reduced acid spread and consequently a reduction in the deterioration of the overlay to the anode mesh.

The present invention is further illustrated by the following example which is not limiting.

**EXAMPLE**

A cementitious powder blend was prepared by dry blending. The blend had the following composition by weight:

| | % |
|---|---|
| Portland cement | 60.000 |
| Graded silica sand (63-800 micrometres) | 39.077 |
| Polyethylene·fibre | 0.100 |
| Hydroxypropoxy methyl cellulose | 0.020 |
| Powdered defoamer (blend of hydrocarbons, fatty substances, non-ionic emulsifiers and silicone oil) | 0.200 |
| Plasticizer (melamine formaldehyde condensate) | 0.600 |
| Air entrainer (alkyl aryl sulphate) | 0.003 |

This powder blend was mixed with an aqueous acrylic dispersion (available from Rohm & Haas as Primal MC76 registered trade mark) having a solids content of 14% by weight, the proportions being such that the acrylic polymer content was 4% of the weight of the cement component. In some compositions, additional carbon fibres were also included in the composition.

A metal oxide coated titanium wire ("Tectrode" leadwire available from ICI Chemicals and Polymers Limited) was embedded in a mortar prism using, as the mortar, the cementitious composition described herein. The titanium wire was connected, as the anode, to a constant current unit (D.C.) and a steel rod was connected as the cathode. The prism and the steel rod were immersed in an aqueous solution saturated with lime and sodium chloride. A potential difference was established between anode and cathode to give a current of 20 mA. The voltage required to maintain the constant current was noted at various times. After 14 days, the mortar prism was disconnected and removed from the solution. A solution containing phenolphthalein indicator was sprayed onto the exposed mortar surface and the portion of the mortar surface which turned pink was determined to indicate the amount of mortar not affected by hydrogen ions. The results are set out in the following table.

## TABLE 1

|  | Composition containing no fibres | Composition containing uncoated carbon fibres | Composition containing metal coated carbon fibres |
|---|---|---|---|
| Fibre added (%) (a) | nil | 0.5 | 0.5 |
| Volts    1 h | 10.11 | 1.89 | 1.97 |
|          1 d | >20 | 1.88 | 2.15 |
|          4 d | >20.0 | 2.03 | 2.30 |
|          8 d | >20.0 | >20.0 | 2.52 |
|          14 d | 13.00 | 8.93 | 3.12 |
| Ampere hours/m$^2$ passed the anode surface | 2473 | 3926 | 4455 |
| % mortar affected (volume) | 30.78 | 6.8 | 0.0008 |

### Notes to Table 1

(a)  % is amount (weight) of fibre relative to the composition of the mortar.

It will be observed that the presence of carbon fibres produced a considerable reduction in the proportion of the mortar volume which was uncoloured, particularly metal-coated carbon fibres even at higher total amount of received current (= Amph/m$^2$ anode). The reduction in the uncoloured mortar indicates a reduction in the amount of affected mortar

Further, it will be observed that using the cementitious composition containing no fibres the applied voltages required to maintain the specified current became undesirably high within one day whereas using the cementitious composition containing uncoated fibre the applied voltage required to maintain the specified current became undesirably high only after 8 days and using the cementitious composition containing the nickel-coated fibre, the applied voltage required to maintain the specified current was still acceptably low after 14 days.

## Claims

1. A composite reinforced concrete structure comprising metal reinforcement embedded in concrete and a mesh conductor embedded in a cementitious composition having a resistivity of not more than 500 ohm-cm through which the conductor is attached to the surface of the structure.

2. A structure as claimed in claim 1 wherein the conductor mesh comprises a mesh of conductive polymer coated copper wires or a metal oxide coated titanium mesh.

3. A structure as claimed in claim 1 wherein the cementitious composition comprises a hydraulic cement containing a conducting filler.

4. A structure according to claim 3 wherein the conducting filler is carbon.

5. A system according to claim 3 or claim 4 wherein the conducting filler is in the form of a fibre.

6. A structure according to claim 5 wherein the average length of the fibre is less than 10 mm.

7. A system according to claim 5 of claim 6 wherein the average diameter of the fibre is less than 10 micrometers.

8. A system according to any one of claims 5 to 7 wherein the fibre has a metal coating.

9. A structure according to claim 8 wherein the thickness of the metal coating is not more than 20% of the diameter of the coated fibre.

10. A structure according to claim 3 wherein the conducting filler is a mixture of carbon fibre and carbon black in which the carbon fibre is at least 50% by weight of the mixture.

11. A structure as claimed in claim 1 wherein the conducting filler comprises 0.05% to 5% by weight of the conducting cementitious composition.

12. A structure according to anyone of claims 1 to 11 wherein the cementitious composition overlays the mesh conductor to a depth from 2 mm to 50 mm.

EP 0 499 438 A1

| | European Patent Office | EUROPEAN SEARCH REPORT | Application Number |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 147 977 ( RAYCHEM CORP.) | 1,3-6, 10,11 | C23F13/02 C04B32/02 |
| Y | * ABSTRACT * <br> * page 12, line 7 - line 9 * <br> --- | 2,12 | |
| Y | MATERIALS PERFORMANCE. <br> March 1988, HOUSTON US <br> pages 19 - 25; <br> G:G: CLEMENA: 'Electrically conductive concrete' <br> * page 21, left column, line 5 - line 7 * <br> * page 24, right column, line 3 - line 6 * <br> * page 24,  conclusion 1 3 and 4 * <br> * page 22, right column, line 6 - line 8 * <br> --- | 1,3-6, 10,11 | |
| Y | MATERIALS PERFORMANCE. <br> vol. 26, no. 12, December 1987, HOUSTON US <br> pages 12 - 21; <br> B.S. WYATT ET AL.: 'A review of cathodic protection of reinforced concrete.' <br> * page 15, right column, line 33 - page 16, left column, line 8 * <br> * page 16, right column, line 11 - line 18 * <br> * page 16, right column, line 39 - line 42 * <br> --- | 2,12 | |
| A | FR-A-2 148 092 (HOECHST) <br> * claim 1 * <br> --- | 1 | |
| A | GB-A-1 363 429 (ELECTRICITY COUNCEL) <br> * claim 1 * <br> --- | 8 | |
| A | CHEMICAL ABSTRACTS, vol. 103, no. 10, <br> September 1985, Columbus, Ohio, US; <br> abstract no. 75440, <br> TEIJIN LTD.: 'Fibers for reinforced cement' <br> page 269 ; <br> * abstract * <br> & JP-A-60 054 950 (TEIJIN LTD.) 29 March 1985 <br> --- <br> -/-- | 8 | |

TECHNICAL FIELDS SEARCHED (Int. Cl.5 )

C23F
C04B

The present search report has been drawn up for all claims

| Place of search | Date of completion of the search | Examiner |
|---|---|---|
| THE HAGUE | 20 MAY 1992 | DAELEMAN P.C.A. |

| European Patent Office | EUROPEAN SEARCH REPORT | Application Number |
|---|---|---|
| | | EP 92 30 1108 |

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | GB-A-2 216 140 (J.A. EDWARDS)<br><br>----- | | |
| | | | **TECHNICAL FIELDS SEARCHED (Int. Cl.5 )** |

The present search report has been drawn up for all claims

| Place of search | Date of completion of the search | Examiner |
|---|---|---|
| THE HAGUE | 20 MAY 1992 | DAELEMAN P.C.A. |

EPO FORM 1503 03.82 (P0401)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

\.................................................................................

& : member of the same patent family, corresponding document